# EUROPEAN PATENT APPLICATION

(11) **EP 1 724 512 A1**
(43) Date of publication of application: **22.11.2006**
(21) Application number: 06252600.9
(22) Date of filing: 18.05.2006
(51) Int. Cl.: F16L 47/28, F16L 47/03, F16L 25/14

(54) **Tapping tee**

(30) Priority: 18.05.2005 GB 0510131
(71) Applicant: Uponor Innovation AB, 513 81 Fristad (SE)
(72) Inventor: Muckle, Derek John, Long Whalton Leicester LE12 5DN (GB); Street, Ronald Arthur, Belper Derby DE56 4BT (GB)
(74) Representative: Lunt, Mark George Francis

(57) **Abstract**

A tapping tee (20) for a plastics pipeline comprises a saddle (21) adapted to be mounted on the plastics pipeline, a hollow body (22) integral with the saddle and provided with an axial bore; a cutter disposed within the bore of the hollow body and adapted in use to traverse the bore, to contact the pipeline wall and to cut a hole therein, and a spigot (23) integral with the body and in fluid connection with the axial bore of the body, the spigot being provided with an extended flexible section (26) and having a multi-reducer (27) at its distal end adapted to receive a tubular electrofusion element therein or thereon.

## Description

### FIELD OF THE INVENTION

This invention relates to tapping tees, and more particularly to a tapping tee adapted to be mounted on a plastics pipeline to facilitate the connection of a service pipe thereto.

### BACKGROUND OF THE INVENTION

In a number of countries, utility companies are engaged in work to replace ageing metallic pipeline systems with new polyethylene pressure pipes. The preferred method of replacement is either to make use of the existing metallic main to act as a conduit into which the new polyethylene pipe can be inserted, or to use the existing main as a guide to form the route for the new pipe (for example in pipe bursting techniques).

As a general rule, (in the UK gas industry, for example) the service pipes are renewed in polyethylene prior to the replacement of the main. The service pipe replacement may be some months or years prior to the mains replacement (for example to deal with leakage), or may be in the days immediately prior to the mains replacement.

When a service pipe is renewed in polyethylene, it is normally joined to the old supply main via a metallic tee fitting. The metallic tee is screwed into the main and the polyethylene pipe is screwed into the tee. The connection for the polyethylene (PE) pipe is made using a mechanical compression fitting, part of which comprises a metal insert that is disposed inside the PE pipe.

For replacement of the main, the most common technique employed in the UK gas industry is termed "dead insertion". By the use of this technique, the gas main is first decommissioned and then the empty main is used as a conduit through which the new main can be inserted. By definition the new main is smaller than the original main. Dead insertion accounts for at least 60 to 80% of all mains renewal.

Prior to insertion of the new PE main inside the old main, the service pipes to the properties connected to the main are first disconnected. The common method for doing this is to break the iron pipe in the service excavation so that it is no longer present. Excavations of this nature are made as small as practicable as the export and import of materials is a major cost in any mains replacement programme,

The final stage is for the metal compression fitting at the end of the polyethylene service pipe to be removed. Due to the presence of the metal insert in the service pipe end section, the pipe is of necessity cut back a short distance from its end.

In the next stage of the procedure, a new polyethylene pipe is inserted inside the old metal main. At each service pipe junction the polyethylene pipe is guided to ensure that the new polyethylene main threads the full length of the section being renovated. The new polyethylene main is then pressure tested to confirm that it is suitable for commissioning to natural gas. The next stage of the procedure is to reconnect the service pipe connections for the individual properties.

The preferred method of jointing a service pipe to a polyethylene main is through the use of a tapping tee fitting.

A tapping tee is a fitting that can be mounted on a pipe and thereby enable a cutter to travel through the body of the fitting in order to cut a hole in the main. Typically the tapping tee is provided with a body having a through bore to accommodate the cutter and a spigot outlet for connecting a service pipe to the tapping tee so that fluid can pass from the main through the tapping tee to the service pipe when the cutter is withdrawn. It is known to connect the tapping tee to the outer surface of a plastics main by means of a plastics saddle that is provided with a saddle-shaped electrofusion element. The electrofusion element can be disposed adjacent to, and preferably embedded in, a fusible polymer material, whereupon it is generally referred to as an electrofusion mat. Tapping tees provided with saddles and saddle-shaped electrofusion elements and mats are disclosed in US-A-4933037, US-A-4806181 and US-A-5104468, and in GB-A-2310264. The entire disclosures of these patents are incorporated herein by reference for all purposes.

The spigot and the service pipe can also be joined by electrofusion, for example, by using a tubular electrofusion coupler. An electrofusion coupler typically comprises a tubular plastics body having an internal wall comprising a fusible polymeric material and an electrofusion element disposed adjacent to, and preferably embedded in, the fusible polymeric material.

Because the service pipe is cut back, ending a short distance from the original metallic connection, and because the position of the inserted new polyethylene main is constrained by the original iron main, it is quite common to have a situation in a mains replacement programme where the service pipe is insufficiently long to reach the spigot outlet on a tapping tee.

The commonly used solution at the worksite is therefore to increase the width of the gap between the end of the service pipe and the spigot outlet, to enable an additional length of service pipe to be inserted and welded using two electrofusion couplers, the length being increased in proportion to the defection in centreline positions of the tapping tee spigot and the service pipe.

At the present time in the UK there are six common sizes of service pipe which are encountered. In the 1970's, imperial dimension service pipe was laid with outside diameters of ½" (21 mm), ¾" (27mm) and 1" (34mm). Following conversion to metric, the revised pipe diameters were 20mm, 25mm and 32mm. If an installer does not know in advance what the diameters of the service pipes are, then he must carry a full range of couplers and reducers for all the combinations, multiplied by the number of service pipes to be transferred on a given days activity. Clearly this is a significant number of fittings, and can amount to nine fittings combinations or more. Added to this are the additional length of polyethylene service pipe and additional couplers required to extend the spigot outlet of the tapping tee. It is apparent that there would be a significant supply chain benefit to reducing the amount on inventory held in relation to this activity.

The above described installation procedure assumes that there are no other issues that would increase the complexity of the installation. Sometimes it is not practical to install the new plastics tapping tee at the position of the original metal connection. This can be due, for example, to the presence of obstructions, which can prevent the use of installation tools. In this case the tapping tee must be disposed a short distance further along the main. The service pipe is then extended but this time, in addition to the extension, a further elbow fitting is required to make the final termination to the tapping tee. In other instances the excavated hole may not be large enough to allow the installer sufficient room to make the termination without additional components.

It will be apparent that there are many diffculties associated with the existing replacement procedures and an improvement therein is urgently required.

### BRIEF SUMMARY OF THE DISCLOSURE

Throughout the description and claims of this specification, the words "comprise" and "contain" and variations of the words, for example "comprising" and "comprises", mean "including but not limited to", and are not intended to (and do not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

According to the present invention there is provided a tapping tee with an extended flexible spigot outlet.

According to a first aspect of the present invention there is provided a tapping tee for a plastics pipeline comprising:
a saddle adapted to be mounted on the plastics pipeline;
a hollow body integral with the saddle and provided with an axial bore;
a cutter disposed within the bore of the hollow body and adapted in use to traverse the bore, to contact the pipeline wall and to cut a hole therein; and
a spigot integral with the body and in fluid connection with the axial bore of the body,
the spigot being provided with an extended flexible section and having a distal end adapted to receive a tubular electrofusion element therein or thereon.

In a second aspect the invention provides a method for connecting a plastics service pipe to a plastics pipeline wherein there is mounted on the pipeline a tapping tee, the tapping tee comprising a saddle adapted to be mounted on the plastics pipeline, a hollow body integral with the saddle and provided with an axial bore, a cutter disposed within the bore of the hollow body and adapted in use to traverse the bore and a spigot integral with the body and in fluid connection with the axial bore of the body, the spigot being provided with an extended flexible section and having a distal end adapted to receive a tubular electrofusion element therein or thereon, which comprises:
fusing the saddle to the pipeline;
bending the extended flexible section of the spigot so that the distal end of the spigot is in register with the end of the service pipe;
disposing a tubular electrofusion coupler about the distal end of the spigot and the end of the service pipe and fusing the electrofusion coupler thereto to form a fusion joint therebetween; and
traversing the bore with the cutter to cut a hole in the pipeline and make a fluid connection between the pipeline and the service pipe.

The tapping tee is preferably formed wholly from plastics material (other than the cutter, which is usually metallic).

The saddle of the tapping tee can be of any suitable shape, but is usually an annular disc or polygon (preferably a square or rectangle), curved to conform to the outer wall of the plastics pipeline. The saddle is preferably provided with a saddle-shaped electrofusion element, which can, if desired, be embedded in a fusible polymeric material in the form of a saddle-shaped electrofusion mat. The mat can be mounted on the saddle by screws or other connecting means, or can clip into a recess moulded into the saddle. Alternatively the electrofusion mat can be mounted on the saddle by the use of a hot melt adhesive as described in our pending UK application 0501453.5. In yet another alternative, where the saddle comprises a fusible polymeric material, the electrofusion element can be integrated with the saddle by over-moulding the saddle. In a still further embodiment, a wire for the electrofusion element of the saddle can be embedded within the pre-moulded body of the saddle by "ploughing-in" the wire.

The electrofusion element is preferably embedded in a fusible polymeric material. Suitable fusible polymeric materials include, for example, olefinically unsaturated polymeric materials such as polyethylene, polypropylene, polybutylene, and higher olefinic polymers; copolymers of ethylene, propylene and butylenes with each other and with other olefinically unsaturated monomers, olefinically unsaturated aromatic polymers, such as polystyrene and styrene copolymers; and polymers and copolymers of vinyl monomers such as ethylene vinyl acetate copolymers, and such like materials. Block copolymers and polymer blends of polymerised monomers of any of the abovementioned polymers are also included. A particularly suitable polymeric material is polyethylene, and this is the preferred polymeric material for use in the present invention.

The electrofusion element is preferably a spirally wound electrofusion resistance wire forming a fusion coil. The fusion coil can be singly or doubly wound, although double winding is preferred Examples of suitable saddle-shaped electrofusion elements and methods for their manufacture and use are described in US-A-4933037 and US-A-5104468.

The body of the tapping tee is preferably moulded integrally with the saddle and can be formed from the same or different plastics material. Both the saddle and the body of the tapping tee assembly can independently be formed from any suitable polymeric material and, for example, they can be formed from any of the fusible polymeric materials listed above. Preferably both the saddle and the body of the tapping tee are formed from a polyolefin polymer, more preferably from polyethylene. If desired, the polymeric material of the saddle and the body of the tapping tee can be cross-linked.

The body of the tapping tee is preferably provided with a threaded bore cooperating with external threads on the cutter such that when the cutter is rotated it can travel along the bore. The cutter is preferably cylindrically shaped and formed from a metallic material. The cutter can be provided with a sharpened cutting edge, saw teeth or other suitable means for cutting through the wall of the plastics pipeline.

The spigot is integral with the body of the tapping tee and can, for example, extend at 90° to the axis of the bore. The spigot is in fluid communication with the bore and the arrangement is preferably such that the cutter does not completely block the opening of the spigot at any point during its travel, in order that pressure testing can be carried out during installation of the tapping tee and in order that fluid is free to pass from the pipeline to the service pipe in use.

The spigot can be moulded integrally with the body of the tapping tee, but often it will be more convenient to form the spigot as a separate component (for example, by moulding or extrusion, or a combination thereof) and fuse the spigot to the body of the tapping tee in a factory environment. For example the spigot can be injection moulded and then butt fused to the body of the tapping tee. Alternatively, the spigot could be integrated with the body by using a socket fusion technique, or by using a vibration/friction welding technique.

In this specification, the term "extended", when applied to the flexible section of the spigot, is intended to mean that the flexible section is of such a length that the total length of the spigot is greater than that of a conventional tapping tee spigot, and such that it can bridge a gap between the end of the service pipe and the tapping tee. In general the length of the flexible section will be at least twice the OD of the spigot, preferably at least three times the OD of the spigot, more preferably at least five times the OD of the spigot, for example, about eight times the OD of the spigot. The extended flexible section of the spigot preferably has a length of at least 50mm, more preferably at least 100mm, and can, for example, have a length of from 150mm to 500mm, more preferably from 200mm to 400mm, most preferably from 250mm to 300mm.

In this specification, the term "flexible" is intended to mean that the extended section of the spigot has a bending radius smaller than the bending radius of the service pipe. In general, the minimum cold bending radius of the service pipe is recommended to be 15 times the OD of the pipe. Accordingly, the minimum cold bending radius of the flexible section of the spigot is less than 15 times the OD of the spigot, preferably less than 10 times the OD of the spigot, more preferably from 1 to 5 times the OD of the spigot. In many cases, the flexible section of the spigot will have a minimum cold bending radius of less than 320 mm, more preferably less than 160 mm, for example, about 80 mm. In general, there will be no specific maximum cold bending radius of the flexible spigot section, but usually a cold bending radius of 1 times the OD of the spigot is sufficient for most installations.

In certain embodiments the spigot can be flexible along its entire length, but usually a short length adjacent the body of the tapping tee, and the multi-reducer hereinafter described will have relatively less flexibility.

The flexibility of the extended section of the spigot can be obtained either by material selection or by selection of an appropriate profile having reduced bending resistance. For example, where the extended flexible section of the spigot is formed from a polyethylene material, selection of a lower density polyethylene leads to increased flexibility of the extended section of the spigot. Alternatively, or in addition, the extended flexible section of the spigot can be formed with a profile such that the section has increased flexibility, even though in many cases the wall thickness may remain substantially unaltered. For example, the extended flexible section can be moulded or extruded to have a ribbed, convoluted, or corrugated profile with a reduced bending resistance. A ribbed profile can be produced, for example, by injection moulding, and the ribs can approximate to a sinusoidal waveform in so far as this is compatible with extraction of the mould core from the interior of the component.

Where the extended flexible section of the spigot has a ribbed profile, it may desirably have a diameter larger than the nominal diameter of the service pipe. For example, where a nominal 32mm diameter service pipe is to be connected to the polyethylene main, the ribbed section could have a diameter of 40mm. Enlarging the nominal diameter of the extended flexible section of the spigot can also be advantageous in that the body of the tapping tee can be moulded with a short length of spigot and the larger diameter flexible section of the spigot can be integrated therewith by inserting the short length of spigot into one end of the flexible spigot section and fusing the overlapping lengths of spigot together. By enlarging the diameter of the flexible section, the pressure loss is reduced through the assembly. This may be required to compensate for the ribbed section, where present, or it could assist in deciding whether or not the spigot reducer needs to be trimmed at the work site, as hereinafter described.

in a particularly preferred embodiment in accordance with the invention, the distal end of the spigot is provided with a terminal spigot multi-reducer. The terminal spigot multi-reducer comprises a stepped terminal having sections defining lands of different O/D adapted to receive electrofusion couplers of different I/D.

Typical pipe dimensions likely to be encountered in the UK gas industry, and elsewhere, are as follows:

| Nominal Pipe dimensions | O/D (max) mm | I/D (min) mm |
|---|---|---|
| 20mm | 20.3 | 16.2 |
| ½" | 21.5 | 16.6 |
| 25mm | 25.3 | 19.6 |
| ¾" | 26.6 | 21.0 |
| 32mm | 32.3 | 25.2 |
| 1" | 33.7 | 26.4 |

If the hydraulic analysis permits, i.e. if the pressure drop is not an issue, then the spigot reducer is preferably sized so that it does not need to be trimmed to the actual pipe size being joined. For example, if the connection is to be made to a 32mm service pipe, and tie spigot multi-reducer comprises three stepped sections of 20mm, 25mm and 32mm, then the two smaller steps are sized so that they can slide inside the bore of the service pipe to which the polyethylene main is being joined.

The spigot has a distal end adapted to receive a tubular electrofusion element therein or thereon. For example, a separate tubular electrofusion coupler can be a push fit on the spigot multi-relducer or can be received therein.

In a further important embodiment of the invention, there is provided an electrofusion coupler for the distal end of the spigot that is range rated between a metric and an imperial pipe size, for example, 20/½", 25/¾" and 32/1". The spigot reducer is sized accordingly so that the diameters of the three lands are, for example, 19.0/19.3mm, 24.7/25.0mm and 32.0/32.3mm. By this route the multi-reducer can fit into the bores of both the imperial and metric pipes, and be capable of being welded by one of three fittings. This significantly reduces the number of fittings which are required at an installation.

### BRIEF DESCRIPTION OF THE DRAWINGS

Certain preferred embodiments of the invention will now be described, by way of example only, with reference to the accompanying drawings in which:
Figure 1 shows a prior art tapping tee in sectional side elevation;
Figure 2 shows a prior art tapping tee mounted on a renewed polyethylene main in sectional side elevation, showing the displacement of the service pipe;
Figure 3 shows a perspective view of a tapping tee according to the invention; and
Figure 4 shows the tapping tee of Figure 3, in sectional side elevation with the service pipe connected.

### DETAILED DESCRIPTION

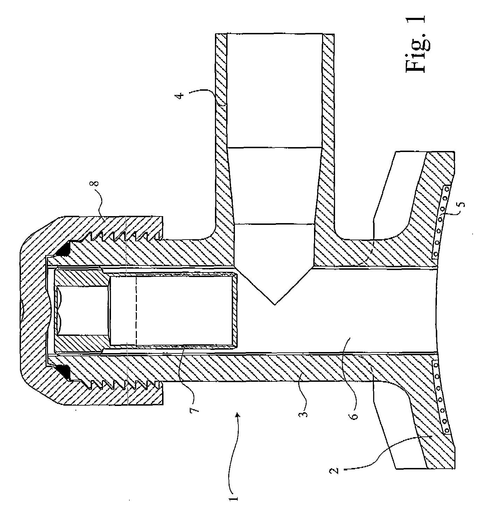

Referring firstly to Figure 1, the tapping tee, illustrated generally at 1, comprises an integrally moulded saddle 2, body 3 and spigot 4. The saddle 2 is provided with a saddle-shaped electrofusion mat 5, which is attached thereto by over-moulding, snap-fit, screws or other fastening means (not shown). The body 3 has an axially extending screw threaded bore 6, and, disposed within the bore, a metal cutter 7 having a screw threaded outer surface that cooperates with the screw thread of the bore. The bore is surmounted by a screw threaded cap 8, which provides a pressure and an environmental seal.

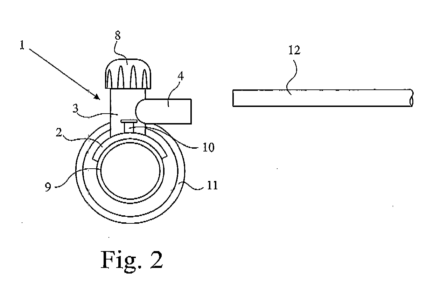

Referring to Figure 2, the saddle 2 is fused to the outer surface of a polyethylene main 9 by energising the electrofusion mat through electrical terminals 10. The polyethylene main 9 is inserted within an outer cast iron main 11, which has been broken away to allow placement of the tapping tee. It will be observed that the spigot 4 is offset from the service pipe 12, which necessitates further cutting back of the service pipe 12 in order to allow for the insertion of a new length of service pipe(not shown) to connect the spigot 4 to the service pipe 12. In this prior art arrangement two tubular electrofusion couplers (not shown) are required to connect the new length of service pipe to respectively the spigot 4 and the service pipe 12.

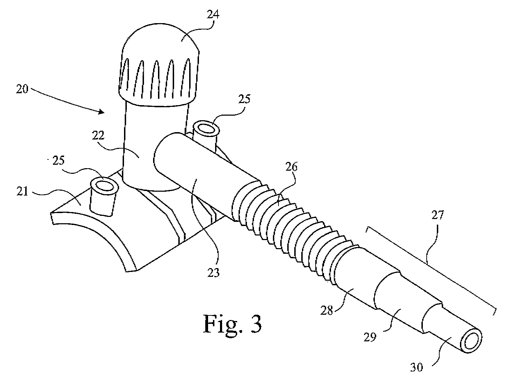

Referring now to Figure 3, there is shown an embodiment of a tapping tee according to the invention. The tapping tee, illustrated generally at 20, comprises a saddle 21, a body 22, and a spigot 23. As in Figure 1, the body 22 has an axially extending screw threaded bore (not shown), and, disposed within the bore, a metal cutter (not shown) having a screw threaded outer surface that cooperates with the screw thread of the bore. The bore is surmounted by a screw threaded cap 24, which provides a pressure and environmental seal. The saddle 21 is provided with an electrofusion mat, which can be energised through electrical terminals 25.

The spigot 23 has a flexible ribbed section 26 and a stepped multi-reducer 27. The stepped multi-reducer 27 has three stepped lands, 28, 29 and 30, of diminishing OD.

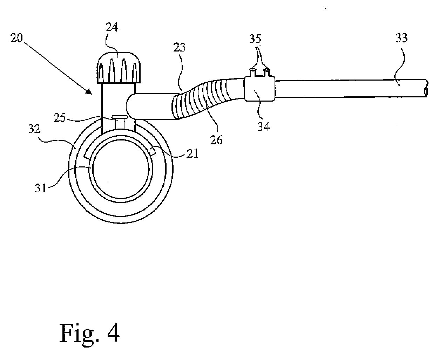

Turning now to Figure 4, the tapping tee 20 of Figure 3 is shown installed on a renewed polyethylene main with the flexible spigot connected to a service pipe.

After the new polyethylene main 31 has been inserted into the old cast iron main 32, and the old cast iron main 32 has been broken away to allow the tapping tee 20 to be installed on the polyethylene main 31, an electric power source is connected to the electrical terminals 25 to energise the electrofusion mat and fuse the saddle 21 to the polyethylene main.

Next, the flexible spigot section 26 is bent until its distal end approaches the end of the service pipe 33. A tubular electrofusion coupler 34 is then placed over the end of the service pipe 33 and the stepped multi-reducer 27 is pushed into the end of the service pipe 33 until the service pipe is a tight fit on one of the lands 28, 29 or 30, depending on the OD of the service pipe. The electrofusion coupler 34 is then moved until it is centred over the joint between the service pipe 33 and the multi-reducer 27. The electrical terminals 25 on the electrofusion coupler 34 are then connected to a source of electric power in order to fuse the electrofusion coupler 34 to the service pipe 33 and the flexible spigot 13.

After the electrofusion joints have been allowed to cool, the cutter can be rotated in the bore in order to cut a hole in the polyethylene main 31. The cutter is then withdrawn, the system pressure tested, and the screw threaded cap 24 screwed on to the body of the tapping tee to complete the installation.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the combination, except combinations where at least some of such features and/or steps are mutually exclusive.

Each feature disclosed in this specification (including any accompanying claims, abstract and drawings), may be replaced by altemative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A tapping tee for a plastics pipeline comprising:
a saddle adapted to be mounted on the plastics pipeline;
a hollow body integral with the saddle and provided with an axial bore;
a cutter disposed within the bore of the hollow body and adapted in use to traverse the bore, to contact the pipeline wall and to cut a hole therein; and
a spigot integral with the body and in fluid connection with the axial bore of the body, the spigot being provided with an extended flexible section and having a distal end adapted to receive a tubular electrofusion element therein or thereon,
said distal end being provided with a terminal spigot multi-reducer.

2. A tapping tee according to claim 1, wherein:
the saddle is an annular disc or polygon, curved to conform to the outer wall of the plastics pipeline, or
the saddle is provided with an electrofusion mat, or
the body of the tapping tee is moulded integrally with the saddle, or
both the saddle and the body of the tapping tee assembly are formed from polyethylene.

3. A tapping tee according to claim 1 or 2, wherein;
the body of the tapping tee assembly is provided with a threaded bore cooperating with external threads on the cutter such that when the cutter is rotated it can travel along the bore, or
the cutter is formed from a metallic material, or
the spigot extends at 90° to the axis of the bore.

4. A tapping tee according to any one of the preceding claims, wherein:
the spigot is formed as a separate component by moulding or extrusion, or a combination thereof and fused to the body of the tapping tee, or
the spigot is injection moulded and then butt fused to the body of the tapping tee, or
the spigot is integrated with the body by using a socket fusion technique, or by using a vibration/friction welding technique.

5. A tapping tee according to any one of the preceding claims, wherein:
the length of the flexible section of the spigot is at least three times the OD of the spigot, or
the flexible section of the spigot has a length of from 150mm to 500mm, or the minimum cold bending radius of the flexible section of the spigot is less than 10 times the OD of the spigot, or
the flexible section of the spigot has a minimum cold bending radius of less than 160 mm.

6. A tapping tee according to any one of the preceding claims, wherein:
the flexibility of the extended section of the spigot is obtained by material selection, or
the flexibility of the extended section of the spigot is obtained by selection of an appropriate profile having reduced bending resistance, or,
the flexibility of the extended section of the spigot is obtained by material selection and by selection of an appropriate profile having reduced bending resistance, or
the flexible section of the spigot is formed from a low density polyethylene.

7. A tapping tee according to any one of the preceding claims, wherein:
the flexible section of the spigot is moulded or extruded to have a ribbed or convoluted profile with a reduced bending resistance, or
wherein the flexible section of the spigot has a ribbed profile and is produced by injection moulding.

8. A tapping tee according to any one of the preceding claims, wherein:
the flexible section of the spigot has a diameter larger than the nominal diameter of the service pipe, or
wherein a nominal 32mm diameter service pipe is to be connected to the polyethylene main, and the flexible section has a diameter of 40mm.

9. A tapping tee according to any one of the preceding claims, wherein the spigot multi-reducer is sized so that it does not need to be trimmed to the actual pipe size being joined thereto.

10. A tapping tee according to claim 9, wherein the spigot multi-reducer comprises a plurality of stepped sections such that the smaller lands are sized so that if necessary they can slide inside the bore of the service pipe to which the polyethylene main is being joined.

11. A tapping tee according to any one of the preceding claims, wherein there is provided an electrofusion coupler for the distal end of the spigot that is range rated between a metric and an imperial pipe size, and the spigot multi-reducer is sized accordingly.

12. A method for connecting a plastics service pipe to a plastics pipeline
wherein there is mounted on the pipeline a tapping tee, the tapping tee comprising a saddle adapted to be mounted on the plastics pipeline, a hollow body integral with the saddle and provided with an axial bore, a cutter disposed within the bore of the hollow body and adapted in use to traverse the bore and a spigot integral with the body and in fluid connection with the axial bore of the body, the spigot being provided with an extended flexible section and having a distal end adapted to receive a tubular electrofusion element therein or thereon, said distal end being provided with a terminal spigot multi-reducer which comprises:
fusing the saddle to the pipeline,
bending the extended flexible section of the spigot so that the distal end of the spigot is in register with the end of the service pipe,
disposing a tubular electrofusion coupler about the distal end of the spigot and the end of the service pipe and fusing the electrofusion coupler thereto to form a fusion joint therebetween, and
traversing the bore with the cutter to cut a hole in the pipeline and make a fluid connection between the pipeline and the service pipe.
